# EUROPÄISCHE PATENTSCHRIFT

(11) **EP 0 557 309 B1**
(45) Veröffentlichungstag und Bekanntmachung des Hinweises auf die Patenterteilung: **27.07.1994**
(21) Anmeldenummer: 91918569.4
(22) Anmeldetag: 04.11.1991
(51) Int. Cl.: F01N 3/20, F01N 3/28

(54) **BEHEIZBARE KATALYSATORANORDNUNG FÜR DIE ABGASREINIGUNG VON VERBRENNUNGSMOTOREN**
HEATABLE CATALYST ARRANGEMENT FOR CLEANING THE EXHAUST GASES OF INTERNAL COMBUSTION ENGINES
SYSTEME DE CATALYSEUR CHAUFFABLE POUR LA PURIFICATION DES GAZ D'ECHAPPEMENT DES MOTEURS A COMBUSTION INTERNE

(30) Priorität: 12.11.1990 DE 4035971
(43) Veröffentlichungstag der Anmeldung: 01.09.1993
(73) Patentinhaber: Emitec Gesellschaft für Emissionstechnologie mbH, 53797 Lohmar (DE)
(72) Erfinder: SWARS, Helmut, D-5060 Bergisch Gladbach 1 (DE); BRÜCK, Rolf, D-5060 Bergisch Gladbach 1 (DE)
(74) Vertreter: Kahlhöfer, Hermann, Dipl.-Phys.
(86) Internationale Anmeldenummer: EP9102079
(87) Internationale Veröffentlichungsnummer: WO9208883

(56) Entgegenhaltungen:
- WO-A-89/10470
- DE-A- 2 333 092
- US-A- 4 928 485
- Patent Abstracts of Japan, vol. 3, no. 53 (M-58) 8. Mai 1979 & JP-A-54 030 311 (TOYOTA JIDOSHA) 6. März 1979

## Beschreibung

Die vorliegende Erfindung betrifft eine beheizbare Katalysatoranordnung für die Abgasreinigung von Verbrennungsmotoren, insbesondere für Ottomotoren.

Im Zuge der weltweit immer strenger werdenden Umweltgesetzgebung werden immer mehr Fahrzeuge mit katalytischen Abgasreinigungsanlagen ausgerüstet, wobei auch zur Senkung der Schadstoffemissionen in der Startphase bereits beheizbare Katalysatoranordnungen bekannt sind, beispielsweise aus der WO89/10470. Geeignete elektrisch leitfähige Wabenkörper, mit denen sich eine solche Beheizung schnell durchführen läßt, sind aus der WO 89/10471 ebenfalls bekannt.

Bisher wurde davon ausgegangen, daß für eine wirkungsvolle Vorheizung einer Katalysatoranordnung zur Beschleunigung des Beginns der katalytischen Reaktionen der vordere Teil einer Katalysatoranordnung oder ein gesonderter Vorkatalysator beheizt werden müßten, da das noch kalte Abgas auf diese Bauteile zuerst auftrifft. Dieses an sich richtige Konzept kann im Einzelfall jedoch je nach den konstruktiven Gegebenheiten und anderen Randbedingungen verschiedene Nachteile haben. So strahlt eine beheizte Stirnseite einer Katalysatoranordnung beim Vorheizen vor Anlassen des Motors einen Teil der eingebrachten elektrischen Energie in Form von Wärmestrahlung an Bauteile des Rohrleitungssystemes ab, wo die Wärme relativ schnell an die Umgebung abgeführt wird und daher zum Vorheizen des späteren Abgasstromes nicht mehr zur Verfügung steht. Dies erhöht die notwendige elektrische Energie für eine wirksame Vorheizung. Darüber hinaus ist es bekannt, daß die vorderste Scheibe einer Katalysatoranordnung im Laute der Zeit durch das auftreffende Abgas und die in dieser Scheibe ablaufenden katalytischen Reaktionen geschädigt und in der katalytischen Aktivität beeinträchtigt wird. Wenn gerade diese Scheibe elektrisch beheizt wird, um dort die katalytische Aktivität frühzeitig zu entfalten, so kann dies im Laufe der Zeit zu einem Nachlassen der Wirksamkeit der Vorheizung führen, da ein katalytisch nicht mehr aktiver Teilbereich beheizt wird. Schließlich ist auch bekannt, daß in den Abgasen in geringen Mengen enthaltene Katalysatorgifte sich gerade im ersten Teilbereich eines Katalysatorsystems niederschlagen und dort die katalytische Aktivität herabsetzen. Auch aus diesem Grunde ist es nicht immer günstig, gerade den ersten Teilbereich eines Katalysators zur Verbesserung des Anspringverhaltens elektrisch zu beheizen. Aus der DE-OS 23 33 092 ist auch schon bekannt, durch Beheizung eines mittleren Teiles einer Katalysatoranordnung mit kleiner Leistung diesen Teil nach Abschalten des Motors auf hoher Temperatur zu halten, um bei erneuter Inbetriebnahme des Motors den Schadstoffausstoß zu senken. Die vorgeschlagene Anordnung ist allerdings für ein schnelles Aufheizen wegen ihres hohen Widerstandes und der damit geringen elektrischen Leistungsaufnahme nicht geeignet. In der EP-A-0 334 066 ist ein Gehäuse eines Abgaskatalysators für Brennkraftmaschinen beschrieben. Dabei sind mindestens zwei Trägerkörper jeweils von Mantelwänden umgeben, die ihrerseits durch ein Formteil paßgerecht miteinander verbunden sind. Die Trägerkörper können dabei auch unterschiedliche Größen haben. Aufgabe der vorliegenden Erfindung ist daher die Schaffung einer schnell beheizbaren Katalysatoranordnung für die Abgasreinigung von Verbrennungsmotoren, insbesondere von Ottomotoren, bei der die eingesetzte elektrische Energie optimal zur Beschleunigung des Ansprechens der Katalysatoranordnung beitragen kann und deren Anspringverhalten im Laufe einer langen Lebensdauer der Katalysatoranordnung möglichst wenig nachläßt.

Zur Lösung dieser Aufgabe dient eine in einem gemeinsamen Gehäuse untergebracht Katalysatoranordnung mit mindestens einem ersten Teilkatalysator, mindestens einem zweiten Teilkatalysator und einer zwischen dem ersten Teilkatalysator und dem zweiten Teilkatalysator angeordneten elektrischen Heizeinrichtung, wobei die elektrische Heizeinrichtung vorzugsweise ein direkt elektrisch beheizbarer metallischer Wabenkörper ist. Die Anordnung ist dadurch gekennzeichnet, daß der erste Teilkatalysator ein geringeres Volumen und/oder eine geringere katalytisch aktive Oberfläche als der zweite Teilkatalysator hat. Besonders geeignet sind metallische Wabenkörper mit etwa 50 bis 200 cpi (cells per squareinch entsprechend der üblicherweise benutzten Einheit für die Anzahl der Zellen bzw. Kanäle pro Querschnittsfläche). Solche Körper können typischerweise mit etwa 100 cpi hergestellt werden. In mehrere Scheiben unterteilte Katalysatoren sind bei Kraftfahrzeugen schon lange bekannt und aus fertigungstechnischen und anderen Gründen häufig eingesetzt. Auch Katalysatoren mit drei und mehr Scheiben sind bekannt und ihre Einbindung in ein gemeinsames Gehäuse stellt kein Problem dar. Fertigungstechnische Schwierigkeiten ergeben sich daher für die vorliegende Erfindung gegenüber dem Stand der Technik nicht. Dafür entstehen jedoch entscheidende Vorteile. Zum einen heizt die von der Heizeinrichtung bei einem eventuellen Vorheizen ohne Abgasstrom abgestrahlte Wärme im wesentlichen die benachbarten Stirnseiten der Teilkatalysatoren auf, so daß diese abgestrahlte Wärme für die Aufheizung des ersten Abgasstromes mit zur Verfügung steht. Außerdem schützt der erste Teilkatalysator die Heizeinrichtung vor Katalysatorgiften. Schließlich steht die in der Heizeinrichtung erzeugte Wärme für den katalytischen Prozeß in der Heizeinrichtung selbst oder im zweiten Teilkatalysator zur Verfügung und aktiviert damit einen Teilbereich der Katalysatoranordnung, der auch nach längerer Betriebszeit in seiner katalytischen Aktivität nur wenig beeinträchtigt ist. Auch fertigungstechnische Vorteile können sich durch die erfindungsgemäße Anordnung ergeben, insbesondere wenn die einzelnen Teilkatalysatoren nicht vollständig voneinander getrennt sind, sondern teilweise zusammenhängen oder sich gegeneinander abstützen.

Eine besonders günstige Ausnutzung aller Teile ergibt sich natürlich, wenn die Heizeinrichtung zumindest teilweise mit einer katalytisch aktiven Beschichtung versehen ist, vorzugsweise einer Beschichtung mit beschleunigender Wirkung für die Oxidation von Abgasen. Zwar kann es auch genügen, wenn die Heizeinrichtung den beginnenden Abgasstrom aufheizt und dieser dann mit genügender Temperatur auf die nachfolgenden katalytisch aktiven Oberflächen trifft, jedoch ergeben sich besonders gürstige Verhältnisse, wenn der elektrisch beheizbare Wabenkörper gleichzeitig eine katalytisch aktive Beschichtung trägt und damit direkt die Umsetzung des ersten anströmenden Abgases auslöst.

Für die Umsetzung der Schadstoffe im Abgas in der Kaltstartphase spielt es zunächst keine Rolle, daß der erste Teilkatalysator an der katalytischen Umsetzung nicht beteiligt ist. Voraussetzung dafür ist allerdings, daß Heizeinrichtung und zweiter Teilkatalysator zusammen genügend katalytisch aktive Fläche für eine vollständige Umsetzung bereitstellen. Außerdem entzieht natürlich der noch nicht aktive erste Teilkatalysator dem anströmenden Abgas zunächst noch Wärme, die im zweiten Teilkatalysator dann nicht zur Verfügung steht, was durch genügendes Vorheizen oder gegebenenfalls auch durch Nachheizen nach dem Starten des Verbrennungsmotors durch die elektrische Heizeinrichtung ausgeglichen werden muß. Aus diesen Gründen kann es besonders sinnvoll sein, daß der erste Teilkatalysator ein geringeres Volumen und/oder eine geringere katalytisch aktive Oberfläche als der zweite Teilkatalysator hat. Nach Erreichen der notwendigen Temperatur für die katalytische Umsetzung im ersten Teilkatalysator übernimmt dieser dann den größten Teil der Umsetzung, wodurch die Heizeinrichtung und der zweite Teilkatalysator geringer altern und für spätere Kaltstarts weiterhin ihre voll katalytische Aktivität zur Verfügung stellen können.

Die erfindungsgemäße Katalysatoranordnung ist nicht auf bestimmte Arten von Teilkatalysatoren und Heizeinrichtungen beschränkt. So können die einzelnen Teilkatalysatoren entweder übliche metallische Wabenkörper mit katalytisch aktiver Beschichtung oder üblich keramische Wabenkörper mit katalytisch aktiver Beschichtung sein, wobei auch Kombinationen aus beiden nicht grundsätzlich auszuschließen sind.

Falls beide Teilkatalysatoren keramische Wabenkörper sind, besteht die Möglichkeit, die Heizeinrichtung an deren inneren Stirnseiten zu haltern, während die Wabenkörper selbst in üblicher Weise in einer gemeinsamen Mantelrohr angeordnet sind. Da keramische Wabenkörper elektrisch isolieren, bietet sich hier eine relativ günstige Möglichkeit, Heizdrähte, Heizwendeln oder andere mit hohen elektrischen Strömen beaufschlagbare metallische Strukturen auf einfache Weise als Heizeinrichtung zu haltern.

Zu beachten ist dabei, daß für eine wirkungsvolle Beheizung in vertretbar kurzen Zeiten die Heizeinrichtung eine Heizleistung von 0,5 bis 8 kW, vorzugsweise etwa 3 bis 5 kW haben sollte. Dies setzt bei den in Kraftfahrzeugen üblicherweise zur Verfügung stehenden Spannungen, z. B. 12 V, hohe Ströme mit entsprechenden Zuleitungen und Leitungsquerschnitten in der Heizeinrichtung voraus. Geeignete Ausführungen sind beispielsweise in der WO 89/10471 angegeben.

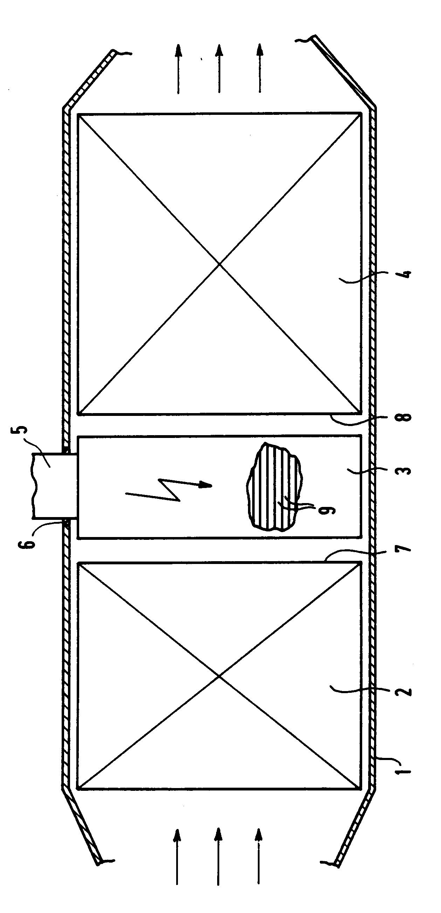

Ein Ausführungsbeispiel der Erfindung ist schematisch in der Zeichnung dargestellt, wobei auf eine detaillierte Beschreibung der in großer Zahl aus dem Stand der Technik bekannten Arten der Halterung von Wabenkörpern in einem Gehäuse verzichtet wurde.

Die Zeichnung zeigt in einem schematischen Längsschnitt eine Katalysatoranordnung, welche in Richtung der Pfeile von einem Abgas durchströmbar ist. In einem Gehäuse 1 sind ein erster Teilkatalysator 2, eine Heizeinrichtung 3 und ein zweiter Teilkatalysator 4 angeordnet. Die Heizeinrichtung 3 enthält von Abgas durchströmbare Kanäle 9 und weist mindestens einen elektrischen Anschlußkontakt 5 auf, welcher durch eine elektrisch isolierte Durchführung 6 durch das Gehäuse 1 nach außen geführt ist. Sofern das Gehäuse 1 selbst nicht als zweiter elektrischer Anschlußkontakt ausgebildet ist, muß die Heizeinrichtung 3 noch einen weiteren, hier nicht dargestellten elektrischen Anschlußkontakt aufweisen.

Wird die Heizeinrichtung 3 schon vor Beaufschlagung der Anordnung mit Abgas geheizt, so wird etwas Wärme zu den inneren Stirnseiten 7, 8 der angrenzenden Teilkatalysatoren 2, 4 abgestrahlt, steht dort jedoch nach dem Starten des Verbrennungsmotors zur Aufheizung des noch kalten Abgases zur Verfügung und geht nicht teilweise verloren, wie dies bei einzeln oder vor einem Hauptkatalysator angeordneten Heizeinrichtungen der Fall sein kann.

Die vorliegende Erfindung eignet sich zur Anwendung sowohl in Verbindung mit keramischen Teilkatalysatoren, wobei dann die Halterung der Heizeinrichtung 3 zwischen den inneren Stirnseiten 7, 8 der beiden Teilkatalysatoren 2, 4 elektrisch isolierend besonders günstig ausgeführt werden kann, als auch in Verbindung mit metallischen Teilkatalysatoren, wobei dann die gemeinsame Einbindung in ein metallisches Gehäuse besonders einfach ist. In jedem Fall ergibt sich eine wirkungsvolle und langlebige elektrisch beheizbare Katalysatoranordnung, welche den Schadstoffausstoß in der Kaltstartphase eines Verbrennungsmotors stark reduzieren kann.

## Patentansprüche

1. Katalysatoranordnung für die Abgasreinigung von Verbrennungsmotoren mit mindestens einem ersten Teilkatalysator (2), mindestens einem zweiten Teilkatalysator (4) und einer zwischen dem ersten Teilkatalysator (2) und dem zweiten Teilkatalysator (4) in einem gemeinsamen Gehäuse angeordneten elektrischen Heizeinrichtung (3), dadurch gekennzeichnet, daß der erste Teilkatalysator (2) ein geringeres Volumen und/oder eine geringere katalytisch aktive Oberfläche als der zweite Teilkatalysator (4) hat.

2. Katalysatoranordnung nach Anspruch 1, dadurch gekennzeichnet, daß die Heizeinrichtung (3) ein direkt elektrisch beheizbarer metallischer Wabenkörper, vorzugsweise mit einer Zellenzahl von 50 bis 200 cpi (cells per squareinch), insbesondere mit etwa 100 cpi, ist.

3. Katalysatoranordnung nach Anspruch 1 oder 2, dadurch gekennzeichnet, daß die Heizeinrichtung (3) zumindest teilweise mit einer katalytisch aktiven Beschichtung versehen ist, vorzugsweise einer Beschichtung mit beschleunigender Wirkung für die Oxidation von Abgasen.

4. Katalysatoranordnung nach Anspruch 1, 2 oder 3, dadurch gekennzeichnet, daß der erste (2) und/oder der zweite (4) Teilkatalysator metallische Wabenkörper mit katalytisch aktiver Beschichtung sind.

5. Katalysatoranordnung nach Anspruch 1, 2 oder 3, dadurch gekennzeichnet, daß der erste (2) und/oder der zweite (4) Teilkatalysator keramische Wabenkörper mit katalytisch aktiver Beschichtung sind.

6. Katalysatoranordnung nach Anspruch 5, dadurch gekennzeichnet, daß der erste (2) und der zweite (4) Teilkatalysator keramische Wabenkörper sind und die Heizeinrichtung (3) an deren inneren Stirnseiten (7, 8) gehaltert ist.

7. Katalysatoranordnung nach einem der vorhergehenden Ansprüche, dadurch gekennzeichnet, daß die Heizeinrichtung (3) eine Heizleistung von 0,5 bis 8 kW, vorzugsweise etwa 3 bis 5 kW hat.

## Claims

1. A catalyst arrangement for cleaning the exhaust gases of internal combustion engines comprising at least one first catalyst portion (2), at least one second catalyst portion (4) and an electrical heating means (3) which is arranged between the first catalyst portion (2) and the second catalyst portion (4) in a common housing, characterised in that the first catalyst portion (2) is of smaller volume and/or has a smaller catalytically active surface area than the second catalyst portion (4).

2. A catalyst arrangement according to claim 1 characterised in that the heating means (3) is a directly electrically heatable metallic honeycomb body, preferably with a number of cells of from 50 to 200 cpi (cells per square inch), in particular about 100 cpi.

3. A catalyst arrangement according to claim 1 or claim 2 characterised in that the heating means (3) is at least partially provided with a catalytically active coating, preferably a coating with an accelerating effect for the oxidation of exhaust gases.

4. A catalyst arrangement according to claim 1, claim 2 or claim 3 characterised in that the first (2) and/or the second (4) catalyst portion are metallic honeycomb bodies with a catalytically active coating.

5. A catalyst arrangement according to claim 1, claim 2 or claim 3 characterised in that the first (2) and/or the second (4) catalyst portion are ceramic honeycomb bodies with a catalytically active coating.

6. A catalyst arrangement according to claim 5 characterised in that the first (2) and the second (4) catalyst portions are ceramic honeycomb bodies and the heating means (3) is mounted at the inner ends (7) thereof.

7. A catalyst arrangement according to one of the preceding claims characterised in that the heating means (3) has a heating output of from 0.5 to 8 KW, preferably from about 3 to 5 kW.

## Revendications

1. Dispositif catalyseur pour l'épuration des gaz d'échappement de moteurs à combustion interne, avec au moins un premier catalyseur partiel (2), au moins un second catalyseur partiel (4) et un moyen de chauffage électrique (3) disposé dans un boîtier commun entre le premier catalyseur partiel (2) et le second catalyseur partiel (4), caractérisé en ce que le premier catalyseur partiel (2) présente un volume moindre et/ou une surface active catalytique moindre que le second catalyseur partiel (4).

2. Dispositif catalyseur selon la revendication 1, caractérisé en ce que le moyen de chauffage (3) est un corps alvéolaire métallique directement chauffable, notamment avec un nombre de cellules de 50 à 200 cpi (cellules par pouce carré), en particulier avec environ 100 cpi.

3. Dispositif catalyseur selon la revendication 1 ou 2, caractérisé en ce que le moyen de chauffage (3) est au moins partiellement prévu avec un revêtement à action catalytique, notamment un revêtement à effet ralentisseur de l'oxydation des gaz d'échappement.

4. Dispositif catalyseur selon la revendication 1, 2 ou 3, caractérisé en ce que le premier (2) et/ou le second (4) catalyseur partiel sont des corps alvéolaires métalliques avec revêtement à action catalytique.

5. Dispositif catalyseur selon la revendication 1, 2 ou 3, caractérisé en ce que le premier (2) et/ou le second (4) catalyseur partiel sont des corps alvéolaires céramiques avec revêtement à action catalytique.

6. Dispositif catalyseur selon la revendication 5, caractérisé en ce que le premier (2) et le second (4) catalyseur partiel sont des corps alvéolaires céramiques et le moyen de chauffage (3) est monté sur leurs faces frontales (7, 8).

7. Dispositif catalyseur selon l'une des revendications précédentes, caractérisé en ce que le moyen de chauffage (3) a une puissance de chauffe de 0,5 à 8 kW, notamment d'environ 3 à 5 kW.
